# DEMANDE DE BREVET EUROPEEN

(11) **EP 1 780 534 A1**
(43) Date de publication de la demande: **02.05.2007**
(21) Numéro de dépôt: 06122547.0
(22) Date de dépôt: 19.10.2006
(51) Int. Cl.: G01N 21/91

(54) **Diagnostic ou paramétrage d'une installation de détection par ressuage de défauts débouchants à la surface de pièces**

(30) Priorité: 28.10.2005 FR 0511045
(71) Demandeur: Turbomeca, 64511 Bordes (FR)
(72) Inventeur: BEAUME, Pascal, 64100, BAYONNE (FR)
(74) Mandataire: Joly, Jean-Jacques

(57) **Abrégé**

Le diagnostic ou paramétrage d'une installation de détection par ressuage de défauts débouchants à la surface de pièces, comprenant le passage à travers l'installation d'au moins une cale étalon dont une surface présente au moins une empreinte représentative de type de défaut à détecter, avec application sur la surface de la cale d'une composition pénétrante comportant un produit indicateur, lavage, séchage, application sur la surface de la cale d'une composition comportant un produit révélateur, et éclairage de la surface de la cale pour provoquer une illumination du produit indicateur restant afin de fournir une image révélée de la ou chaque empreinte et en déduire une indication sur la qualité de fonctionnement de l'installation. Avant passage dans l'installation, la cale étalon est soumise à un traitement de préparation comprenant une immersion dans un bain contenant un émulsifiant, un premier rinçage sous pression, un séchage, une application d'un révélateur au moins à l'emplacement de la ou des empreintes, et un deuxième rinçage sous pression.

## Description

### Arrière-plan de l'invention

L'invention concerne le diagnostic ou le paramétrage d'installations de détection de défauts débouchants à la surface de pièces, notamment de pièces métalliques, utilisant la technique du ressuage.

Le ressuage est une technique bien connue de contrôle non destructif de pièces susceptibles de présenter des défauts de surface débouchants, tels que par exemple des criques ou fissures. Une composition pénétrante contenant un produit détecteur, ou indicateur, est appliquée à la surface d'une pièce à contrôler. Le produit détecteur ou indicateur comprend typiquement un composé coloré ou fluorescent qui s'éclaire lorsqu'il est exposé à une lumière adaptée. Après application de la composition pénétrante, un lavage est effectué pour nettoyer la surface de la pièce suivi d'un séchage. Une composition contenant un produit absorbant ou révélateur est ensuite déposée sur la surface de la pièce. Par capillarité, le produit révélateur fait ressortir (ou "ressuer") en surface le produit indicateur ayant pénétré à l'intérieur de défauts débouchants. L'éclairage de la surface par une lumière adaptée au produit indicateur, typiquement un éclairage UV, révèle les défauts éventuels, ce qui permet un contrôle de la pièce par examen visuel.

Une description de procédés connus pour la détection de fissures superficielles à l'aide de produits pénétrants est donnée dans un article de H.J. Stumm « Der Nachweis von Oberflachenrissen mit Hilfe von Eindringmitteln », G-I-T Fachzeitschrift für das Laboratorium, Darmstadt, DE, vol.17, n°9, 1973, pages 955, 957-958.

La qualité de la détection est sensible à de nombreux paramètres de réglage de l'installation et une vérification régulière du bon fonctionnement de celle-ci est nécessaire. On utilise à cet effet des cales étalons qui présentent sur une surface des empreintes représentatives de types de défauts débouchants à détecter. On fait passer une cale étalon, éventuellement avec un lot de pièces à contrôler, à travers l'installation et l'on vérifie que les motifs révélés en fin du processus de ressuage à la surface de la cale étalon sont conformes aux empreintes, les caractéristiques géométriques de celles-ci étant connues.

Des cales étalons peuvent être utilisées non seulement pour vérifier le bon fonctionnement d'une installation de détection de défauts par ressuage, mais aussi pour le paramétrage d'une telle installation, c'est-à-dire la recherche d'un réglage optimum de différents paramètres influençant la qualité de détection, comme proposé dans le document EP 0 650 045.

### Objet et résumé de l'invention

La déposante a mis en évidence la possibilité d'un défaut de fiabilité des diagnostics d'installations effectués par des cales étalons tels qu'ils sont couramment pratiqués, et propose un procédé de diagnostic ou paramétrage d'une installation de détection de défauts par ressuage garantissant que les résultats constatés sur une cale étalon après passage dans l'installation sont le reflet correct de la qualité de détection procurée par l'installation.

Ce but est atteint grâce à un procédé comprenant le passage, dans une installation à contrôler, d'au moins une cale étalon dont une surface présente au moins une empreinte représentative de type de défaut à détecter, avec application sur la surface de la cale d'une composition pénétrante comportant un produit indicateur, lavage, séchage, application sur la surface de la cale d'une composition comportant un produit révélateur, et éclairage de la surface de la cale pour provoquer une illumination du produit indicateur restant afin de fournir une image révélée de la ou chaque empreinte et en déduire une indication sur la qualité de fonctionnement de l'installation, procédé selon lequel avant passage dans l'installation, la cale étalon est soumise à un traitement de préparation comprenant une immersion dans un bain contenant un émulsifiant, un premier rinçage sous pression, un séchage, une application d'un révélateur au moins à l'emplacement de la ou des empreintes, et un deuxième rinçage sous pression.

La déposante a mis en évidence qu'en l'absence d'un tel processus de nettoyage pour la préparation de la cale étalon, une accumulation de différents produits utilisés lors du processus de ressuage, notamment de produits indicateur et révélateur, peut se former dans les empreintes de la cale étalon, colmatant progressivement celles-ci au fur et à mesure de l'utilisation de la cale étalon. La conséquence de la persistance de présence de produit indicateur dans les empreintes fait que celles-ci sont nécessairement révélées en fin du ressuage, indépendamment d'une éventuelle dégradation de la qualité réelle du processus de détection. On peut alors arriver à une situation tout à fait néfaste où les empreintes de la cale étalon apparaissent bien révélées tandis que des défauts réels de pièces traversant l'installation ne le seraient pas.

De préférence, l'immersion de la cale étalon dans un bain contenant un émulsifiant est réalisée avec application d'une énergie ultrasonore. Il est en outre préférable que la surface de la cale étalon comportant des empreintes soit inclinée par rapport à un plan horizontal dans ce bain.

Lors du traitement de préparation de la cale étalon, l'application de produit révélateur aux emplacements des empreintes permet d'extraire un amalgame de la composition pénétrante, de l'émulsifiant et du produit révélateur éventuellement encore présents dans les empreintes avant élimination par rinçage sous pression. On pourra utiliser un révélateur à l'état humide aisément appliqué par pulvérisation, sous forme d'aérosol.

Selon une particularité de l'invention, une image de la cale étalon éclairée est numérisée par caméra, pour transmission à une unité de traitement numérique muni d'un écran de visualisation, après filtrage au moyen d'un filtre centré sur la longueur d'onde du rayonnement émis par le produit indicateur. On s'affranchit ainsi de l'influence possible de rayonnements parasites. Par visualisation de l'image à l'écran ou par traitement numérique, il est possible de déduire de l'image obtenue au moins une information parmi des informations représentatives de caractéristiques géométriques d'empreinte révélée, notamment aire et dimension maximale, et représentatives du niveau de gris moyen d'une image d'empreinte révélée. L'analyse de ces informations permet d'orienter la recherche des causes d'une détection incomplète ou erronée des empreintes, pour diagnostiquer un dysfonctionnement de celle-ci ou pour rechercher des valeurs optimales de paramètres de fonctionnement d'une installation.

### Brève description des dessins

D'autres particularités et avantages de la présente invention ressortiront à la lecture de la description faite ci-après, à titre indicatif mais non limitatif, en référence aux dessins annexés sur lesquels :
- la figure 1 montre des étapes successives d'un procédé de diagnostic d'une installation de détection de défauts de surface par ressuage ;
- la figure 2 est une vue schématique d'un exemple de cale étalon utilisée pour le procédé de la figure 1 ;
- la figure 3 montre des étapes successives d'un processus de préparation de cale étalon pour la mise en oeuvre du procédé de la figure 1;
- la figure 4 montre schématiquement un dispositif d'acquisition d'une image de surface de cale étalon après passage dans une installation de détection de défauts; et
- la figure 5 montre une image d'empreinte révélée de cale étalon telle qu'acquise par le dispositif de la figure 4.

### Description détaillée de modes de réalisation de l'invention

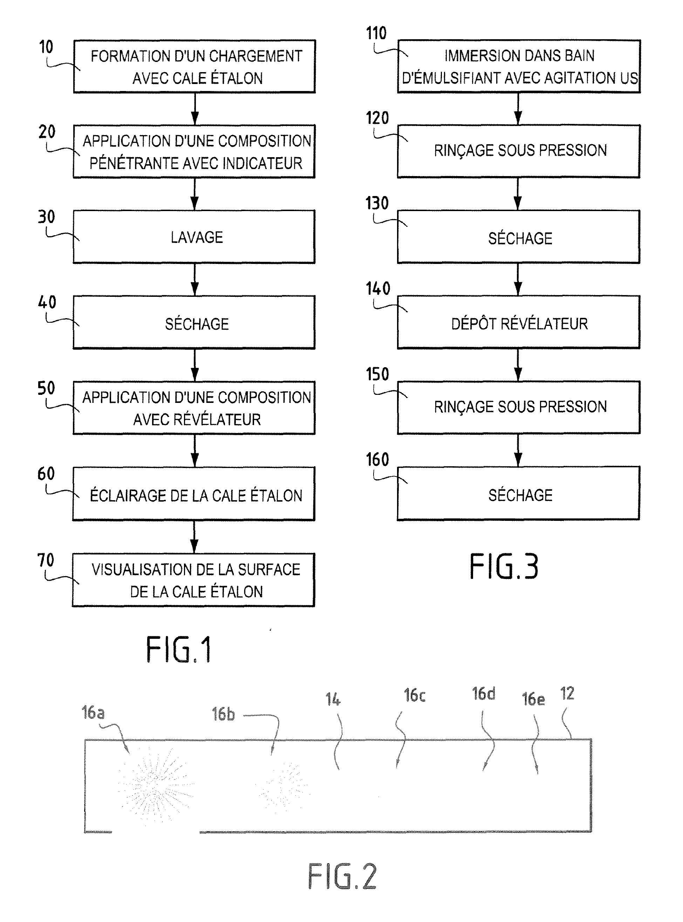

La figure 1 indique des étapes successives d'un procédé de diagnostic ou contrôle d'une installation de détection par ressuage de défauts débouchants à la surface de pièces, procédé qui consiste à faire passer au moins une cale étalon à travers l'installation à contrôler en soumettant la cale étalon à des traitements identiques à ceux appliqués à des pièces à la surface desquelles d'éventuels défauts doivent être détectés.

De façon bien connue, on utilise une cale étalon dont une surface présente une ou généralement plusieurs empreintes qui sont représentatives de types de défauts débouchants à détecter, tels que fissures et criques, sur des surfaces de pièces métalliques. Un exemple d'une telle cale étalon 12 commercialisée par la société Babb Co sous la référence "PSM5" est montré schématiquement par la figure 2. Une surface principale 14 de la cale présente plusieurs empreintes, en l'espèce 5 empreintes 16a à 16e de tailles décroissantes. Dans cet exemple, chaque empreinte a une forme générale en étoile, notamment avec des fissures qui rayonnent à partir d'une zone centrale et qui ont une largeur variable. Bien entendu, le procédé selon l'invention n'est pas limité à l'utilisation de ce type particulier de cale étalon et d'empreinte.

Le diagnostic d'une installation de détection de défauts par ressuage est effectué de façon régulière, par exemple quotidiennement ou après un certain nombre de passages de chargements de pièces à inspecter, éventuellement en associant une cale étalon avec un chargement de pièces à inspecter. Ainsi, l'étape 10 du procédé de la figure 1 consiste à former un chargement comprenant une cale étalon et des pièces à inspecter. On pourrait bien entendu utiliser plusieurs cales étalons et l'on pourrait aussi ne pas inclure de pièces à inspecter avec la ou les cales étalons.

Le chargement est placé dans une cuve dans laquelle une composition pénétrante comportant un produit détecteur ou indicateur est appliquée par pulvérisation à la surface de la cale étalon et des pièces (étape 20). Le produit indicateur est typiquement un produit coloré ou fluorescent qui s'éclaire sous un rayonnement UV de caractéristiques appropriées. On utilise de façon courante un composé qui sous éclairage par un rayonnement UV d'une longueur d'onde de 365 nm environ, s'éclaire vivement en produisant un rayonnement d'une longueur d'onde d'environ 550 nm. Un tel composé de sensibilité "W3" ou "P3" et dénommé pénétrant pré-émulsionné ou post-émulsionné, est bien connu.

Un lavage (étape 30) est ensuite effectué pour nettoyer les surfaces de la cale étalon et des pièces. Le lavage peut être effectué en plusieurs étapes et avec utilisation d'agent émulsifiant favorisant l'élimination de la composition contenant le produit indicateur à la surface de la cale étalon et des pièces. Ainsi, on pourra réaliser successivement un pré-rinçage par pulvérisation d'eau sous pression, une immersion dans un bain d'émulsifiant avec agitation et un rinçage par pulvérisation d'eau sous pression. Le lavage pourra être limité à une seule étape de rinçage à l'eau sous pression, notamment dans le cas où un émulsifiant est incorporé au produit indicateur.

Après séchage à l'air chaud (étape 40) une composition contenant un produit révélateur est déposée sur les surfaces de la cale étalon et des pièces, au moins sur la surface de la cale étalon présentant des empreintes et sur les surfaces des pièces où des défauts débouchants éventuels doivent être détectés (étape 50). On utilise un produit révélateur capable, par capillarité, de faire ressortir le produit indicateur qui a pénétré dans les empreintes de la cale étalon et dans les défauts éventuels des pièces. On utilise de façon courante un produit pulvérulent à grains très fins ayant la capacité d'extraire par capillarité la composition pénétrante logée au sein des défauts débouchants éventuels des pièces à inspecter, et des empreintes de la cale étalon, notamment du talc qui est déposé en couche uniforme.

La surface de la cale étalon portant les empreintes et revêtue de produit révélateur est éclairée par une source de lumière UV adaptée au produit indicateur utilisé (étape 60). Les zones où le produit indicateur est présent étant alors vivement illuminées, une visualisation de la surface de la cale étalon (étape 70) permet de vérifier si les empreintes de celles-ci sont correctement révélées par comparaison entre les images révélées et leurs caractéristiques géométriques réelles connues. Le résultat du contrôle peut être considéré comme positif tant que l'écart entre des dimensions des images révélées des empreintes et les dimensions réelles reste dans des limites prédéterminées.

Il est avantageux d'effectuer l'étape 70 de visualisation de la surface de la cale étalon à partir d'une image transmise sur un écran de visualisation. Au moins certaines vérifications peuvent alors être effectuées de façon automatisée par traitement d'une image numérique produite par une caméra.

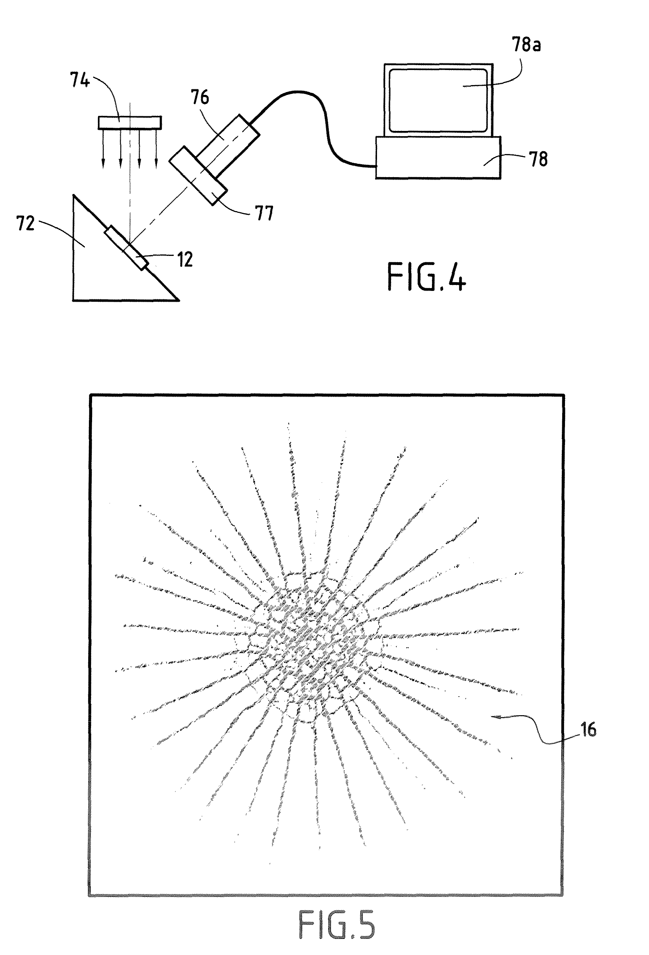

Un appareillage permettant une analyse d'image produite par éclairage d'une cale étalon après passage dans l'installation de détection est illustré par la figure 4. La cale 12 est placée sur un support 72 avec sa face 14 tournée vers l'extérieur. Une source 74 produisant un rayonnement UV adapté à l'illumination du produit indicateur absorbé par le révélateur émet vers la cale 12 avec une direction d'incidence faisant un angle non nul par rapport à la normale à la surface 14. La source 74 est par exemple une source de rayonnement UV avec une longueur d'onde de 365 nm environ.

L'image de la surface 14 est prélevée par une caméra 76 et l'information numérique obtenue est transmise à une unité de traitement numérique telle qu'un ordinateur personnel 78 muni d'un écran 78a sur lequel l'image peut être visualisée. La figure 5 montre un exemple d'une image d'une empreinte telle que révélée par le processus de ressuage et ainsi affichée sur l'écran 78a.

Un filtre 77 est placé devant l'objectif et centré sur la longueur d'onde réémise par le produit indicateur pour éliminer des lumières parasites. Dans le cas évoqué plus haut d'un produit indicateur émettant une longueur d'onde de 550 nm, on pourra utiliser un filtre ne laissant pratiquement passer que cette longueur d'onde, donc de bande passante très réduite.

Différentes informations caractéristiques de l'image révélée d'une ou de chaque empreinte peuvent être obtenues par visualisation à l'écran ou par traitement automatique. Ainsi :
- une visualisation peut être effectuée pour détecter des discontinuités éventuelles des fissures des empreintes ou la présence d'excès éventuels de ressuage sous forme d'amas ou de bavures, ce qui permet de diagnostiquer un produit indicateur insuffisant ou excessif,
- une information représentant l'aire totale occupée par l'image révélée d'une ou de chaque empreinte peut être calculée, donnant une indication de qualité du ressuage et permettant d'effectuer des comparaisons d'un contrôle à l'autre,
- une information représentant la dimension maximale d'une ou de chaque empreinte peut être calculée pour être comparée avec la dimension maximale réelle connue de l'empreinte afin de fixer par exemple un seuil d'acceptabilité,
- une information représentant le niveau de gris moyen d'une empreinte ou de chaque empreinte peut être aussi calculée, laquelle peut fournir une indication sur la qualité du produit indicateur, notamment sa capacité d'illumination.

D'autres informations utiles pour contrôler le bon fonctionnement de l'installation pourront être obtenues à partir de l'image prise de la surface de la cale étalon.

Comme déjà indiqué, la déposante a constaté que le procédé de diagnostic pouvait ne plus être fiable après un certain nombre d'utilisations de la cale étalon. La raison identifiée est un colmatage partiel des empreintes par un amalgame de différents produits utilisés lors du processus, y compris de produit indicateur. La persistance de la présence du produit indicateur fait que les empreintes dans lesquelles il subsiste sont nécessairement révélées même en cas de fonctionnement dégradé de l'installation ce qui, bien entendu, fausse complètement le diagnostic réalisé sur celle-ci.

La figure 3 illustre des étapes successives d'un processus de préparation de cale étalon permettant d'éviter cet inconvénient.

Une première étape 110 consiste à immerger la cale étalon dans un bain contenant un émulsifiant. De préférence, l'immersion est réalisée dans une cuve couplée à un générateur d'ultrasons afin de réaliser une agitation par énergie ultrasonore favorisant l'élimination de produit indicateur. L'émulsifiant est choisi en fonction du produit indicateur utilisé. Il est préférable de maintenir la face de la cale étalon portant les empreintes dans une position inclinée par rapport à un plan horizontal, par exemple incliné d'un angle de 45° environ, pour favoriser l'action de l'émulsifiant. L'immersion avec application d'énergie ultrasonore est réalisée pendant une durée de préférence supérieure à 30 minutes, par exemple entre 30 minutes et plusieurs heures.

Après rinçage à l'eau sous pression (étape 120) et séchage par soufflage d'air sous pression (étape 130), un produit révélateur est appliqué sur la surface de la cale présentant les empreintes, au moins aux emplacements de ceux-ci (étape 140). On utilise avantageusement un révélateur humide qui est pulvérisé sous forme d'aérosol, par souci d'efficacité en comparaison avec un révélateur sous forme de produit pulvérulent sec. Après séchage du révélateur appliqué, celui-ci remplit sa fonction d'extraction de produit indicateur éventuellement encore présent.

Après rinçage à l'eau sous pression (étape 150) et séchage par soufflage d'air sous pression (étape 160), on obtient une cale étalon prête à l'emploi avec des empreintes exemptes de la présence de résidu de produit indicateur.

Le procédé selon l'invention peut être mis en oeuvre non seulement pour le diagnostic d'une installation, mais aussi pour optimiser les réglages de certains paramètres du processus de ressuage, selon un processus du type décrit dans le document EP 0 650 045. De tels paramètres sont par exemple les durée et pression de pulvérisation de la composition contenant le produit indicateur, la pression d'eau de rinçage et éventuellement de pré-rinçage, et les durée et pression de pulvérisation de produit révélateur.

Un paramétrage peut être réalisé pour la mise en route d'une nouvelle installation ou en cas d'utilisation d'un nouveau produit indicateur ou révélateur, le processus selon l'invention pouvant ensuite être périodiquement réalisé pour le diagnostic ou contrôle du bon fonctionnement de l'installation.

## Revendications

1. Procédé de diagnostic ou paramétrage d'une installation de détection par ressuage de défauts débouchants à la surface de pièces, comprenant le passage à travers l'installation d'au moins une cale étalon dont une surface présente au moins une empreinte représentative de type de défaut à détecter, avec application sur la surface de la cale d'une composition pénétrante comportant un produit indicateur, lavage, séchage, application sur la surface de la cale d'une composition comportant un produit révélateur, et éclairage de la surface de la cale pour provoquer une illumination du produit indicateur restant afin de fournir une image révélée de la ou chaque empreinte et en déduire une indication sur la qualité de fonctionnement de l'installation,
**caractérisé en ce que**, avant passage dans l'installation, la cale étalon est soumise à un traitement de préparation comprenant une immersion dans un bain contenant un émulsifiant, un premier rinçage sous pression, un séchage, une application d'un révélateur au moins à l'emplacement de la ou des empreintes, et un deuxième rinçage sous pression.

2. Procédé selon la revendication 1, **caractérisé en ce que** l'immersion de la cale étalon dans un bain contenant un émulsifiant est réalisée avec application d'une énergie ultrasonore.

3. Procédé selon l'une quelconque des revendications 1 et 2, **caractérisé en ce que** lors du traitement de préparation de la cale étalon, on applique le révélateur à l'état humide par pulvérisation.

4. Procédé selon l'une quelconque des revendications 1 à 3, **caractérisé en ce que** l'on déduit de l'image révélée de la ou chaque empreinte au moins une information parmi des informations représentatives de caractéristiques géométriques et représentatives du niveau de gris moyen d'image d'empreinte révélée.

5. Procédé selon la revendication 4, **caractérisé en ce que** l'on déduit des informations représentatives de l'aire et de la dimension maximale d'une image d'empreinte.

6. Procédé selon l'une quelconque des revendications 4 et 5, **caractérisé en ce que** l'image révélée de la surface de la cale étalon est numérisée par caméra pour transmission à une unité de traitement numérique munie d'un écran de visualisation, après filtrage au moyen d'un filtre centré sur la longueur d'onde du rayonnement émis par le produit indicateur.
